(19) Europäisches Patentamt / European Patent Office / Office européen des brevets

(11) **EP 2 890 048 A1**

(12) **EUROPEAN PATENT APPLICATION**

(43) Date of publication:
**01.07.2015 Bulletin 2015/27**

(51) Int Cl.:
**H04L 9/30** $^{(2006.01)}$

(21) Application number: **13306889.0**

(22) Date of filing: **30.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Joye, Marc**
**35576 CESSON SEVIGNE (FR)**
• **Libert, Benoit**
**35576 CESSON SEVIGNE (FR)**

(74) Representative: **Huchet, Anne**
**Technicolor**
**1, rue Jeanne d'Arc**
**92443 Issy-les-Moulineaux Cedex (FR)**

(54) **Method for processing a generalized Goldwasser-Micali ciphertext, corresponding electronic device and computer program product**

(57) In one embodiment, it is proposed a method for processing a generalized Goldwasser-Micali ciphertext, said ciphertext being obtained through a use of a public key, said method being executed on an electronic device and being remarkable in that it comprises:
- determining at least one bit of a binary representation of a plaintext associated with said ciphertext, said at least one bit corresponding to a bit positioned at j-th position of said binary representation of said plaintext, j being an integer greater or equal to one, and position zero of said binary representation corresponding to the least significant bit of said binary representation, said determining being a function of
- said ciphertext,
- an element of said public key,
- a private key associated to said public key,
- an element defined in function of said private key, and
- least significant bits of said plaintext from position zero to j - 1 in said binary representation.

**Description**

Field of the invention

The invention relates to cryptography, and more precisely to homomorphic cryptographic schemes.

Background of the invention

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Additively homomorphic schemes (that enable given only a public-key and the encryption of two messages $m_1$ and $m_2$, one can compute the encryption of ($m_1$ + $m_2$)) are cryptographic functions that enable the design of more complex cryptographic systems. For example, currently, many e-voting schemes employ an additive homomorphic encryption algorithm to encrypt the votes and exploit the additive homomorphism of the encryption algorithm to recover the sum of all votes for any candidate or choice with a single decryption. As no single vote is decrypted, vote privacy is protected. Additive homomorphic schemes can also be used in MPC (for Multi-Party Computation) protocols. At last, other application of additive homomorphic can be found out in the article "Fingerprinting protocol for images based on additive homomorphic property" by M. Kuribayashi et al., and published in the IEEE Trans. Image Process. 2005, or in the article "Application of homomorphism to secure image sharing" by N. Islam et al., published in the journal Optics Communications (Volume 284, Issue 19, 1 September 2011, Pages 4412-4429).

However, only few additively homomorphic schemes exist in the state of the art. Indeed, one skilled in the art has a limited choice of using an additively homomorphic shemes among the original Goldwasser-Micali cryptosystem (see the article "Probabilistic Encryption and How to Play Mental Poker Keeping Secret All Partial Information", by S. Goldwasser and S. Micali, published in the proceedings of STOC'82, pp. 365-377, 1982), Benaloh's construction, the Naccache-Stern scheme, Paillier's cryptosystem scheme, the Boneh-Goh-Nissim (BGN) scheme, the Damgard-Jurik scheme, the additively homomorphic ElGamal cryptosystem scheme, the Okamoto-Uchiyama cryptosystem scheme and the generalized Goldwasser-Micali cryptosystem scheme (published in the article "Efficient Cryptosystems from 2^-th Power Residue Symbols" by M. Joye and B. Libert, published in the proceedings of Eurocrypt 2013, Lecture Notes in Computer Science vol. 7881, pp. 76-92, 2013).

Therefore, one skilled in the art has to choose one of these schemes according to several criteria such as the size of the data (keys, messages), the security level required, the speed of execution of the additively homomorphic schemes, etc.

The present document focuses on the generalized Goldwasser-Micali cryptosystem scheme, and aims to provide a technique that enables an electronic device to speed up the decryption process of the generalized Goldwasser-Micali cryptosystem.

One skilled in the art could also apply the teaching of the present document to the context described in the article "An Application of the Goldwasser-Micali Cryptosystem to Biometric Authentication" by J. Bringer et al., in the proceedings of the conference ACISP'07 (Australasian Conference on Information Security and Privacy), or also in the context of aggregator of time series data as mentioned in the article "A scalable scheme for privacy-preserving aggregation of time-series data" by M. Joye and B. Libert, published in the proceedings of the conference Financial Cryptography and Data Security 2013.

Summary of the invention

The present invention is directed to a method for processing a generalized Goldwasser-Micali ciphertext, said ciphertext being obtained through a use of a public key. Such method is executed on an electronic device and is remarkable in that it comprises:

-   determining at least one bit of a binary representation of a plaintext associated with said ciphertext, said at least one bit corresponding to a bit positioned at $j$-th position of said binary representation of said plaintext, $j$ being an integer greater or equal to one, and position zero of said binary representation corresponding to the least significant bit of said binary representation, said determining being a function of
-   said ciphertext,
-   an element of said public key,
-   a private key associated to said public key,

- an element defined in function of said private key, and
- least significant bits of said plaintext from position zero to $j$ - 1 in said binary representation.

In a preferred embodiment, the method is remarkable in that said determining is performed for all the bits of said binary representation of said plaintext having a position different from zero.

In a preferred embodiment, the method is remarkable in that it comprises obtaining said least significant bit of said binary representation of said plaintext in function of said ciphertext, and said element defined in function of said private key.

In a preferred embodiment, the method is remarkable in that said binary representation of said plaintext is a $k$-bit string, $k$ being an integer greater or equal to one, and in that said element defined in function of said private key corresponds to $\lambda_{j+1} = 2^{k-(j+1)} p'$, where $p'$ is an odd integer linked to said private key $p$, which is a prime number, by the following equation: $p = 2^k p' + 1$.

In a preferred embodiment, the method is remarkable in that said determining of said at least one bit positioned at $j$-th position of said binary representation of said plaintext comprises determining a first value $\left(\frac{c}{y^{m \, mod \, 2^j}}\right)^{\lambda_{j+1}}$,

where $c$ corresponds to said ciphertext, $y$ corresponds to said element of said public key, and comparing said first value with 1 or $p$ - 1.

In a preferred embodiment, the method is remarkable in that said determining said first value comprises obtaining at least a second value $D$ corresponding to $y^{-p'}$ mod $p$, where $mod$ is a modular reduction.

In a preferred embodiment, the method is remarkable in that said determining said first value comprises obtaining at least $i$ values, $i$ being comprised between 1 and $j$, defined in function of said at least second value $D$.

In a preferred embodiment, the method is remarkable in that said determining said first value comprises obtaining at least $i$ values, $i$ being comprised between 1 and $k$ - 1, defined in function of said at least second value $D$.

In a preferred embodiment, the method is remarkable in that said determining said first value comprises obtaining at least a third value $D$ corresponding to $y^{p'}$ mod $p$, where $mod$ is a modular reduction.

In a preferred embodiment, the method is remarkable in that said determining said first value comprises obtaining at least $i$ values, $i$ being comprise between 1 and $j$, defined in function of said at least third value $D$.

In a preferred embodiment, the method is remarkable in that said determining said first value comprises obtaining at least $i$ values, $i$ being comprise between 1 and $k$ - 1, defined in function of said at least third value $\tilde{D}$.

In a preferred embodiment, the method is remarkable in that it comprises determining said private key $p$ from said odd integer $p'$, said odd integer $p'$ being stored on a memory unit of said electronic device.

In a preferred embodiment, the method is remarkable in that said binary representation is stored on said electronic device according to big-endian rule.

In a preferred embodiment, the method is remarkable in that said binary representation is stored on said electronic device according to little-endian rule.

According to an exemplary implementation, the different steps of the method are implemented by a computer software program or programs, this software program comprising software instructions designed to be executed by a data processor of a relay module according to the disclosure and being designed to control the execution of the different steps of this method.

Consequently, an aspect of the disclosure also concerns a program liable to be executed by a computer or by a data processor, this program comprising instructions to command the execution of the steps of a method as mentioned here above.

This program can use any programming language whatsoever and be in the form of a source code, object code or code that is intermediate between source code and object code, such as in a partially compiled form or in any other desirable form.

The disclosure also concerns an information medium readable by a data processor and comprising instructions of a program as mentioned here above.

The information medium can be any entity or device capable of storing the program. For example, the medium can comprise a storage means such as a ROM (which stands for *"Read Only Memory"*), for example a CD-ROM (which stands for *"Compact Disc - Read Only Memory"*) or a microelectronic circuit ROM or again a magnetic recording means, for example a floppy disk or a hard disk drive.

Furthermore, the information medium may be a transmissible carrier such as an electrical or optical signal that can be conveyed through an electrical or optical cable, by radio or by other means. The program can be especially downloaded into an Internet-type network.

Alternately, the information medium can be an integrated circuit into which the program is incorporated, the circuit being adapted to executing or being used in the execution of the method in question.

According to one embodiment, an embodiment of the disclosure is implemented by means of software and/or hardware components. From this viewpoint, the term "module" can correspond in this document both to a software component and to a hardware component or to a set of hardware and software components.

A software component corresponds to one or more computer programs, one or more subprograms of a program, or more generally to any element of a program or a software program capable of implementing a function or a set of functions according to what is described here below for the module concerned. One such software component is executed by a data processor of a physical entity (terminal, server, etc.) and is capable of accessing the hardware resources of this physical entity (memories, recording media, communications buses, input/output electronic boards, user interfaces, etc.).

Similarly, a hardware component corresponds to any element of a hardware unit capable of implementing a function or a set of functions according to what is described here below for the module concerned. It may be a programmable hardware component or a component with an integrated circuit for the execution of software, for example an integrated circuit, a smart card, a memory card, an electronic board for executing firmware etc.

In another embodiment, the present invention is directed to an electronic device for processing a generalized Goldwasser-Micali ciphertext, said ciphertext being obtained through a use of a public key. The electronic device is remarkable in that it comprises:

- means for determining at least one bit of a binary representation of a plaintext associated with said ciphertext, said at least one bit corresponding to a bit positioned at $j$-th position of said binary representation of said plaintext, $j$ being an integer greater or equal to one, and position zero of said binary representation corresponding to the least significant bit of said binary representation, said means for determining being able to determine a function of
- said ciphertext,
- an element of said public key,
- a private key associated to said public key,
- an element defined in function of said private key, and
- least significant bits of said plaintext from position zero to $j$ - 1 in said binary representation.

In a preferred embodiment, the electronic device is remarkable in that said means for determining are used for obtaining all the bits of said binary representation of said plaintext having a position different from zero.

Brief description of the figures

The above and other aspects of the invention will become more apparent by the following detailed description of exemplary embodiments thereof with reference to the attached drawings in which:

- Figure 1 presents a flowchart that depicts a decryption method according to a first embodiment of the invention;
- Figure 2 presents a flowchart that depicts a decryption method according to a second embodiment of the invention;
- Figure 3 presents a flowchart that depicts a decryption method according to a third embodiment of the invention;
- Figure 4 presents a flowchart that depicts a decryption method according to a fourth embodiment of the invention;
- Figure 5 presents a flowchart that depicts a decryption method according to a fifth embodiment of the invention;
- Figure 6 presents a device that can be used to perform one or several steps of methods disclosed in the present document.

Detailed description

The present paragraph is aimed at reminding the reader with the generalized Goldwasser-Micali cryptosystem proposed by Joye and Libert (see the previous mentioned article "Efficient Cryptosystems from 2k-th Power Residue Symbols" by M. Joye and B. Libert, Eurocrypt 2013, Lecture Notes in Computer Science vol. 7881, pp. 76-92, 2013).

Let $N = pq$, where $p$ and $q$ are prime numbers, verifying the following relationships $p \equiv 1 \ mod \ 2^k$ and $q \equiv 1 \ mod \ 2^k$, with the parameter $k$ which is the size (in bits) of the message to be encrypted. Indeed, the message space is $\{0,1\}^k$. Let also $y \in J_N \backslash QR_N$, where $J_N$ is a multiplicative group of integers belonging to $Z_N^*$ whose Jacobi symbol is 1, and $QR_N$ is the set of the quadratic residues modulo $N$. The public key is $pk = \{N,y,k\}$ while the private key is $sk = \{p\}$. Given a message $m = \sum_{i=0}^{k-1} m_i 2^i$, with $m_i \in \{0,1\}$, the corresponding ciphertext is formed as $c \equiv y^m x^{2k} \ mod \ N$ for some random element $x \in Z_N^*$. Let's focus now on the decryption process of the generalized Goldwasser-Micali cryptosystem. The plaintext message $m$ is recovered from the ciphertext $c$ as the unique integer in the interval $[0,2^k)$ satisfying the relationship $\left[\left(\frac{y}{p}\right)_{2^k}\right]^m \equiv \left(\frac{c}{p}\right)_{2^k} mod\ p$ , where the notation $\left(\frac{a}{p}\right)_n$ for values $a,p,n$. corresponds to the $n$-th power residue symbol of a modulo $p$ defined as follows : $\left(\frac{a}{p}\right)n = a^{\frac{p-1}{n}}\ mod\ p$ . The determination of the plaintext based on the previously mentioned relationship can be done with a variation of the Pohlig-Hellman algorithm (published in the article "An improved algorithm for computing logarithms over GF(p) and its cryptographic significance", by S. Pohlig and M. Hellman, in IEEE Trans. on Information Theory, n°24, vol 1, pp. 106-110, 1978) . For example, in a step referenced 101, the electronic device initializes several variables (associated with memory units such as registers for example) $M$, $B$, $C$, $i$ and $Y$ as follows: $M \leftarrow 0$; $B \leftarrow 1$ ; $C \leftarrow c$; $i \leftarrow 1$ and $Y \leftarrow y$. Then, until the value of the variable $i$ is strictly greater than $k + 1$, the following computation and assignments of variables are performed : $z \leftarrow \left(\frac{c}{p}\right)_{2^i}$; $t \leftarrow \left(\frac{y}{p}\right)_{2^i}$; if the values of the variables $z$ and t are different, then the variable $M$ is updated in such way $M \leftarrow M + B$; and the variables $B$ and $i$ are updated: $B \leftarrow 2B$; and $i \leftarrow i + 1$. When the value of the variable $i$ is strictly greater than $k + 1$, the variable $M$ comprises the expected plaintext $m$.

The decryption process in the generalized Goldwasser-Micali cryptosystem requires evaluating several power residue symbols modulo a prime number $p$ ; namely, $\left(\frac{c}{p}\right)_{2^j} = c^{\frac{p-1}{2^j}}\ mod\ p$ and $\left(\frac{y}{p}\right)_{2^j} = y^{\frac{p-1}{2^j}}\ mod\ p$.

As a result, the original decryption algorithm requires $2k$ exponentiations modulo $p$. The present invention suggests a modification that considerably speeds up the decryption. It should be noticed that the encryption process is unchanged.

More precisely, the proposed technique is based on a relationship that links a bit representation of the plaintext, at position $j - 1$ (the least significant bit being at position 0, and corresponding to the bit $m_0$, and the bit at *position $j - 1$* corresponding to $m_{j-1}$, for $1 \le j \le k - 1$ ), and some values. More precisely, the relationship is the following one:

$$(c/y^{m\ mod\ 2^{j-1}})^{\lambda_j} \equiv (-1)^{m_{j-1}}\ mod\ p$$

where the ciphertext $c$ is obtained through the use of the encryption function of the generalized Goldwasser-Micali cryptosystem (e.g. the ciphertext is obtained as $c = y^m x^{2^k}\ mod\ N$ where the message (or plaintext) is $m = \sum_{i=0}^{k-1} m_i 2^i$, with $m_i \in \{0,1\}$ for each i, $N = pq$, where $p$ and $q$ are large prime numbers that fulfill the following properties $p \equiv 1\ mod$ $2^k$, $q \equiv 1\ mod\ 2^k$, and $p \not\equiv 1\ mod\ 2^{k+1}$, $q \not\equiv 1\ mod\ 2^{k+1}$, an element of the public key $y \in J_N \backslash QR_N$) and for $1 \le j \le k$, we set up $\lambda_j = 2^{k-j}p'$, with $p'$ being an odd integer defined such that $p = 2^k p' + 1$ (such relation is verified as it is equivalent to $p \equiv 1\ mod\ 2^k$).

In order to detail how to establish the previous mentioned equation, it should be noticed that we have the following equation that is verified $y^{2_k^{-1}p'} \equiv$ -1 $mod\ p$. Indeed, we have $y^{2^{k-1}p'} = y^{(p-1)/2} = \left(\frac{y}{p}\right) \equiv -1\ mod\ p$.

Then, by setting up $C_j \equiv c^{\lambda_j}$ mod $p$, we have $C_j \equiv (y^m x^{2^k})^{\lambda_j} \equiv y^{m2^{k-j}p'} \equiv y^{(m\ mod\ 2^j)2^{k-j}p'}$ . Therefore,

$C_j \equiv y^{(m_{j-1} 2^{j-1} + \sum_{i=0}^{j-2} m_i 2^i)2^{k-j}p'} \equiv y^{m_{j-1} 2^{k-1}p'} y^{(m\ mod\ 2^{j-1})2^{k-j}p'}$. By applying the previously mentioned equation    in    the    previous    paragraph,    we    obtain $C_j \equiv (-1)^{m_{j-1}} y^{(m\ mod\ 2^{j-1})2^{k-j}p'}$.    Thus,

$C_j \equiv (-1)^{m_{j-1}} y^{(m\ mod\ 2^{j-1})\lambda_j}\ mod\ p$. Hence, the relationship is established.

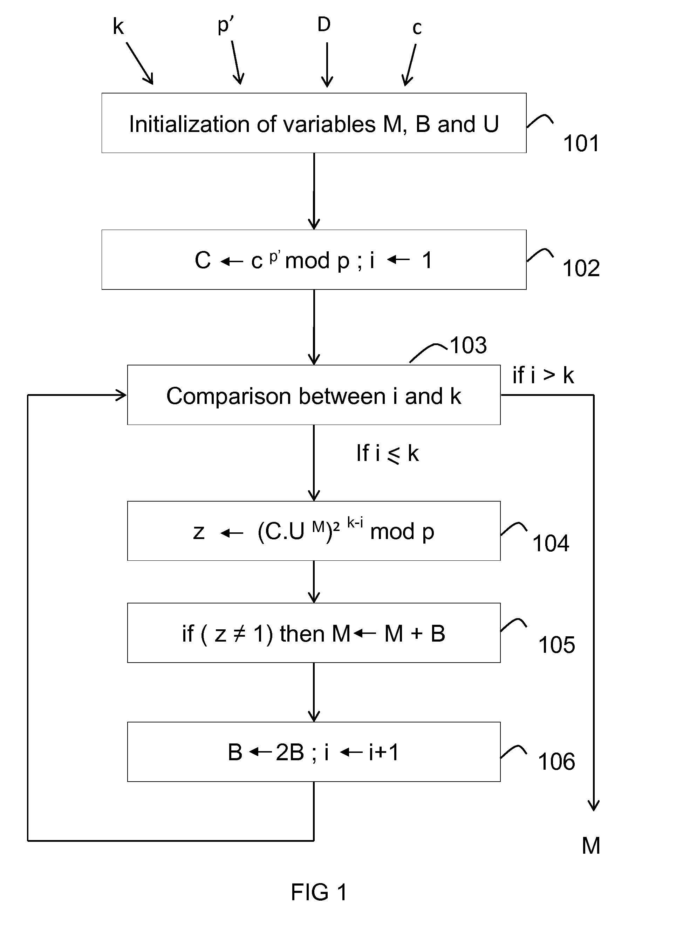

Figure 1 presents a flowchart that depicts a decryption method according to a first embodiment of the invention.
In such embodiment of the invention, the decryption method executed on an electronic device obtains a parameter $k$ corresponding to the size (in number of bits) of the plaintext to be recovered, a secret element $p'$ as previously mentioned, as well as a value $D$ corresponding to the value $y^{-p'}\ mod\ p$, and a ciphertext $c$ (such ciphertext being generated through the use of an encryption function in the generalized Goldwasser-Micali cryptosystem). The obtaining of these elements can be done for example by reading in a memory unit the requested values. In a variant, only the secret element $p'$ is obtained, and the value $D$ is determined from the value of the public element $y$, that can be stored in a memory of the electronic device, or received from another electronic device. In another variant, the secret element $p'$ is obtained from the secret element $p$. In another variant, the secret element $p$ is obtained from the secret element $p'$.

Then, in a step referenced 101, the electronic device initializes several variables (associated with memory units such as registers for example). Indeed, the variables $M$, $B$, $U$ are initialized as follows : $M \leftarrow 0$; $B \leftarrow 1$ and $U \leftarrow D$.

In a step referenced 102, a variable $C$ is initialized by performing an exponentiation, modulo the secret prime number $p$, on the ciphertext with an exponent corresponding to the secret element $p'$ (e.g. we have $C \leftarrow c^{p'} \bmod p$) Moreover, a variable (a counter variable), noted $i$ is initialized to 1 (e.g. $i \leftarrow 1$).

In a step referenced 103, a comparison between the value of the variable $i$ and the parameter $k$ is done. If the value of the variable $i$ is smaller or equal to the value of parameter k, then the steps referenced 104, 105 and 106 are executed. If the value of the variable $i$ is strictly greater than the value of $k$, then the variable $M$ is outputted, and the decryption method is ended up . Indeed, the variable $M$ comprises in that case the value of the plaintext $m$.

In a step referenced 104, an intermediate variable $z$ is assigned with the value of the following element : $(C \cdot U^M)^{2_{k-i}} \bmod p$.

In a step referenced 105, the value of the intermediate variable $z$ is compared with one. If the value of the intermediate variable $z$ is different from one, then the value of the variable $M$ is modified as follows : $M \leftarrow M + B$.

In a step referenced 105, the variable $B$ is updated as follows: $B \leftarrow 2B$, and an increment operation by one of the value of the variable $i$ is performed (e.g. $i \leftarrow i + 1$). Then, the process returns to the step 103.

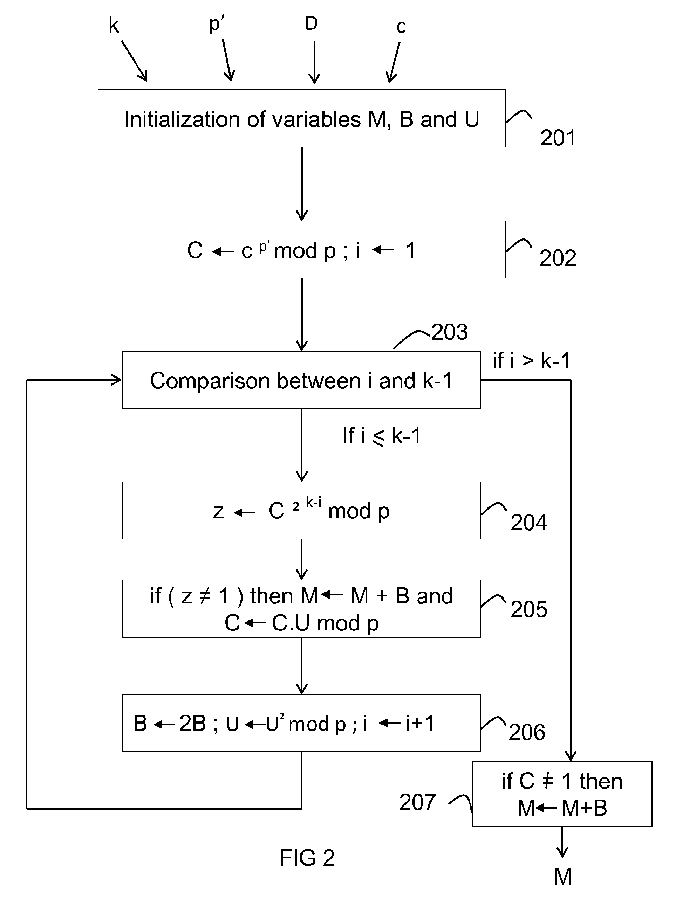

Figure 2 presents a flowchart that depicts a decryption method according to a second embodiment of the invention.

More precisely, by remarking that variable $M$ in the loop of the decryption method described in the Figure 1 contains the lowest part of the plaintext $m$, and that one bit of plaintext $m$ is correctly obtained per iteration, there is no need to recompute $U^M \bmod p$. Rather, it suffices to update it using the variable $C$ as an accumulator. Further, it is also possible to save a couple of operations by reducing the length of the loop process.

In the decryption method according to such second embodiment of the invention, the same inputs as the one described in figure 1 are obtained (and the same remarks are relevant regarding the number of these inputs). The method according to such embodiment comprises a step referenced 201, in which the electronic device initializes several variables (associated with memory units such as registers for example). Indeed, the variables $M$, $B$, $U$ are initialized as follows : $M \leftarrow 0$; $B \leftarrow 1$ and $U \leftarrow D$.

Then, in a step referenced 202, a variable $C$ is initialized by performing an exponentiation, modulo the secret prime number $p$, on the ciphertext with an exponent corresponding to the secret element $p'$ (e.g. we have $C \leftarrow c^{p'} \bmod p$). Moreover, a variable (a counter variable), noted $i$ is initialized to 1 (e.g. $i \leftarrow 1$).

In a step referenced 203, a comparison between the value of the variable $i$ and the value $k - 1$ is performed. If the value of the variable $i$ is smaller or equal to the value $k - 1$, then the steps referenced 204, 205 and 206 are executed. If the value of the variable $i$ is strictly greater than the value $k - 1$, then a step referenced 207 is executed. Such step 207 comprises comparing the value of the variable $C$ with one. If the value of the variable $C$ is different from one, then the variable $M$ is modified as follows: $M \leftarrow M + B$. Otherwise, the variable $M$ is not modified. Then, the variable $M$ is outputted, and the decryption method is ended up. Indeed, the variable $M$ comprises in that case the value of the plaintext $m$.

In a step referenced 204, an intermediate variable $z$ is affected with the value of the following element : $C^{2k-i} \bmod p$.

In a step referenced 205, the value of the intermediate variable $z$ is compared with one. If the value of the intermediate variable $z$ is different from one, then the value of the variable $M$ is modified as follows : $M \leftarrow M + B$, and the value of the variable $C$ is also modified as follows: $C \leftarrow C \cdot U \bmod p$.

In a step referenced 205, the variable $B$ is updated as follows: $B \leftarrow 2B$, the variable $U$ is updated as follows $U \leftarrow U^2 \bmod p$, and an increment operation by one of the value of the variable $i$ is performed (e.g. $i \leftarrow i + 1$). Then the process returns to the step 203.

As already mentioned previously, the value $D$ can be precomputed or included in the private key.

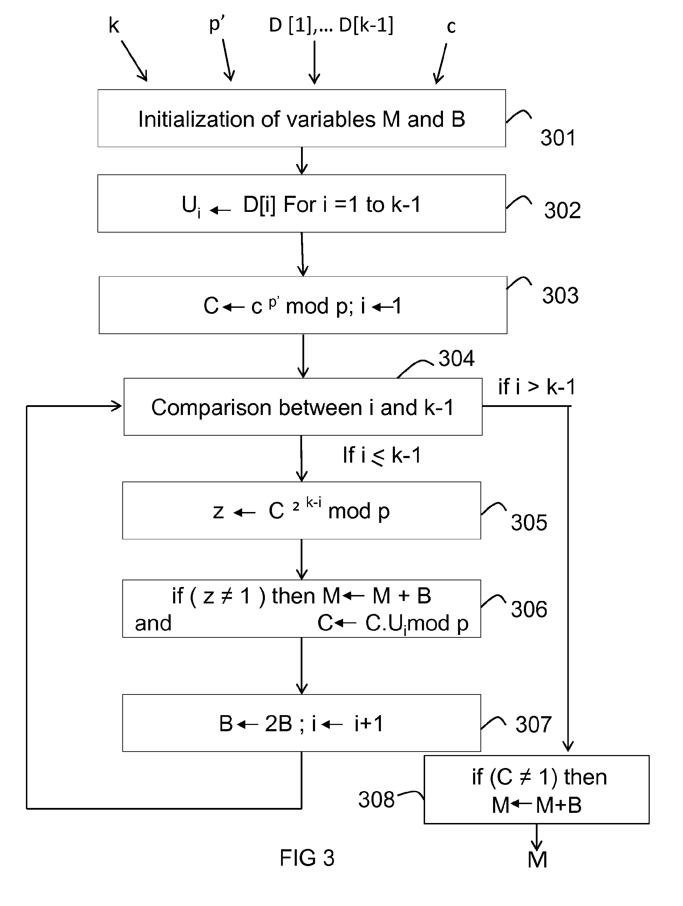

Figure 3 presents a flowchart that depicts a decryption method according to a third embodiment of the invention.

In such embodiment of the invention, the decryption method can be executed faster (due to the fact that such method uses less operations from a complexity point of view) than the previous ones. However, such method needs in input some additional values (or data). Indeed, in addition to the parameter $k$, the secret element $p'$, and the value $D$, it is necessary to also obtain some other values obtained in function of the value D. More precisely, the method comprises obtaining the values $D[j] = D^{2j-1} \bmod p$, for $1 \leq j \leq k - 1$.

The method according to such embodiment comprises a step referenced 301, in which the electronic device initializes several variables (associated with memory units such as registers for example). Indeed, the variables $M$ and $B$ are initialized as follows : $M \leftarrow 0$; $B \leftarrow 1$.

Then, in a step referenced 302, some intermediate variables $U_j$ are initialized as follows: $U_j \leftarrow D[j] = D^{2j-1} \bmod p$, for $1 \leq j \leq k - 1$.

In a step referenced 303, a variable C is initialized in the same way as in the step 202 (e.g. we have $C \leftarrow c^{p'} \bmod p$), and a counter variable $i$ is also initialized as follows: $i \leftarrow 1$.

In a step referenced 304, a comparison between the variable $i$ and the variable $k - 1$ is performed. If the value of the variable $i$ is smaller or equal to the value $k - 1$, then the steps referenced 305, 306 and 307 are executed. If the value of the variable $i$ is strictly greater than the value $k - 1$, then a step referenced 308 is executed. Such step 308 comprises comparing the value of the variable $C$ with one. If the value of the variable $C$ is different from one, then the variable $M$ is modified as follows: $M \leftarrow M + B$. Otherwise, the variable $M$ is not modified. Then, the variable $M$ is outputted, and the decryption method is ended up. Indeed, the variable $M$ comprises in that case the value of the plaintext $m$.

In a step referenced 305, an intermediate variable $z$ is affected with the value of the following element : $C^{2k-i} \bmod p$.

In a step referenced 306, the value of the intermediate variable $z$ is compared with one. If the value of the intermediate variable $z$ is different from one, then the value of the variable $M$ is modified as follows : $M \leftarrow M + B$, and the value of the variable $C$ is also modified as follows: $C \leftarrow C. U_i \bmod p$.

In a step referenced 307, the variable $B$ is updated as follows: $B \leftarrow 2B$, and an increment operation by one of the value of the variable $i$ is performed (e.g. $i \leftarrow i + 1$). Then the process returns to the step 304.

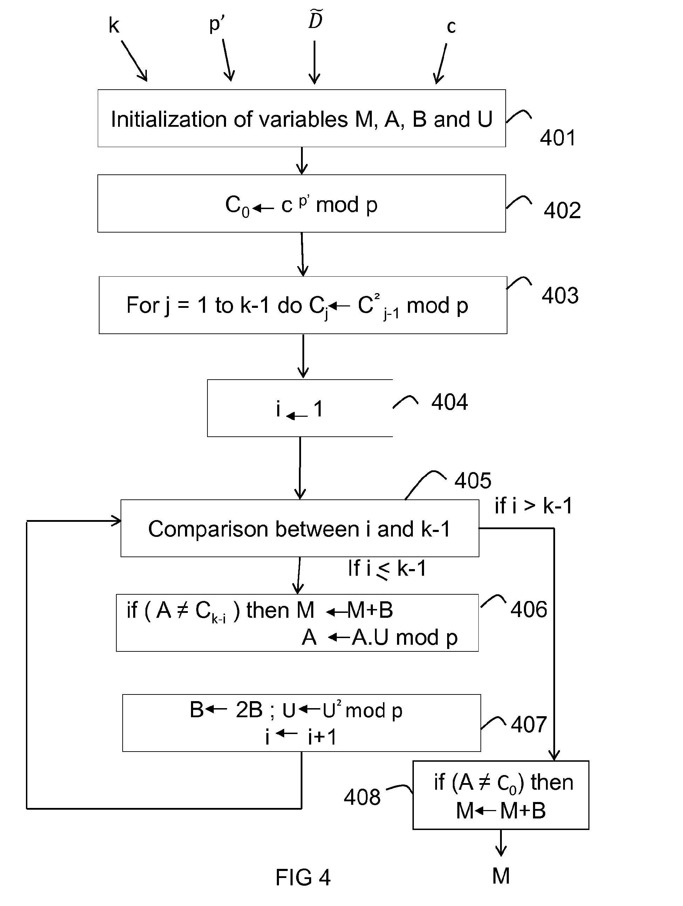

Figure 4 presents a flowchart that depicts a decryption method according to a fourth embodiment of the invention.

In such embodiment, the different values of $C^{2k-i} \bmod p$ mentioned in the previous embodiments are obtained before executing the loop corresponding to the evolution of the value of the variable $i$.

In such embodiment of the invention, the decryption method executed on an electronic device obtains the parameter $k$, the secret element $p'$ as previously mentioned, as well as a value $\tilde{D}$ corresponding to the value $y^{p'} \bmod p$ (e.g. we have $\tilde{D} = D^{-1} \bmod p$), and the ciphertext c . The obtaining of these elements can be done for example by reading in a memory unit the requested values. In a variant, only the secret element $p'$ is obtained, and the value $\tilde{D}$ is determined from the value of the public element $y$, that can be stored in a memory of the electronic device, or received from another electronic device. In another variant, the secret element $p'$ is obtained from the secret element $p$. In another variant, the secret element $p$ is obtained from the secret element $p'$.

The method according to such embodiment comprises a step referenced 401, in which the electronic device initializes several variables (associated with memory units such as registers for example). Indeed, the variables $M, A, B, U$ are initialized as follows : $M \leftarrow 0$; $A \leftarrow 1$, $B \leftarrow 1$ and $U \leftarrow \tilde{D}$.

Then, in a step referenced 402, a variable $C_0$ is initialized by performing an exponentiation, modulo the secret prime number $p$, on the ciphertext with an exponent corresponding to the secret element $p'$ (e.g. we have $C_0 \leftarrow c^{p'} \bmod p$).

Then, in a step referenced 403, some intermediate variables $C_j$ are initialized as follows: $C_j \leftarrow C_{j-1}^2 \bmod p$, for $1 \leq j \leq k - 1$.

In a step referenced 404, a counter variable $i$ is initialized as follows: $i \leftarrow 1$.

In a step referenced 405, a comparison between the variable $i$ and the value $k - 1$ is performed. If the value of the variable $i$ is smaller or equal to the value $k - 1$, then the steps referenced 406 and 407 are executed. If the value of the variable $i$ is strictly greater than the value $k - 1$, then a step referenced 408 is executed. Such step 408 comprises comparing the value of the variable $A$ with the value of the variable $C_0$. If the value of the variable A is different from the value of the variable $C_0$, then the variable $M$ is modified as follows: $M \leftarrow M + B$. Otherwise, the variable $M$ is not modified. Then, the variable $M$ is outputted, and the decryption method is ended up. Indeed, the variable $M$ comprises in that case the value of the plaintext $m$.

In a step referenced 406, the value of the variable $A$ is compared with the one of the variable $C_{k-i}$. If these value are different from each other, then the value of the variable $M$ is modified as follows : $M \leftarrow M + B$, and the value of the variable $A$ is also modified as follows: $A \leftarrow A. U \bmod p$.

In a step referenced 407, the variable $B$ is updated as follows: $B \leftarrow 2B$, the variable $U$ is updated as follows: $U \leftarrow U^2 \bmod p$, and an increment operation by one of the value of the variable $i$ is performed (e.g. $i \leftarrow i + 1$). Then the process returns to the step 405.

By determining the value $\tilde{D}$ and $C_j$ in such way, the method according to this embodiment has a cubic complexity (whereas the classical decryption method has a quartic complexity).

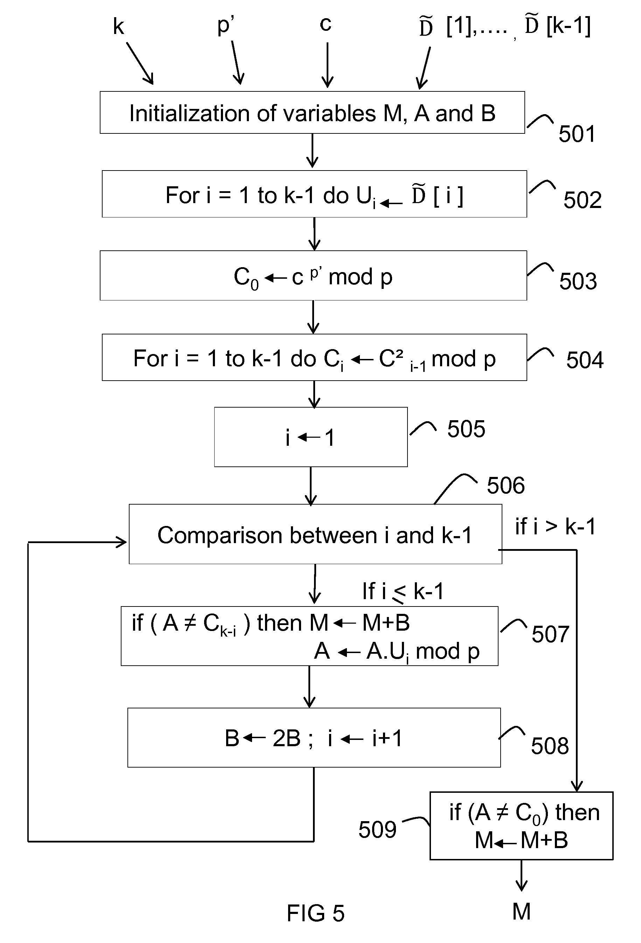

Figure 5 presents a flowchart that depicts a decryption method according to a fifth embodiment of the invention.

Such embodiment of the invention uses the technique described in the Figure 3 to the one described in Figure 4.

Indeed, in addition to the parameter $k$, the secret element $p'$, and the value $\tilde{D}$, it is necessary to also obtain some other values obtained in function of the value D. More precisely, the method comprises obtaining the values $\tilde{D}[j] = \tilde{D}^{2j-1} \bmod p$, for $1 \leq j \leq k - 1$.

The method according to such embodiment comprises a step referenced 501, in which the electronic device initializes several variables (associated with memory units such as registers for example). Indeed, the variables $M, A, B$ are initialized as follows : $M \leftarrow 0$; $A \leftarrow 1$, $B \leftarrow 1$.

Then, in a step referenced 502, some intermediate variables $U_j$ are initialized as follows: $U_j \leftarrow \tilde{D}[j] \equiv \tilde{D}^{2j-1} \bmod p$, for $1 \leq j \leq k - 1$.

Then, in a step referenced 503, a variable $C_0$ is initialized by performing an exponentiation, modulo the secret prime number $p$, on the ciphertext with an exponent corresponding to the secret element $p'$ (e.g. we have $C_0 \leftarrow c^{p'} \bmod p$).

Then, in a step referenced 504, some intermediate variables $C_j$ are initialized as follows: $C_j \leftarrow C_{j-1}^2 \bmod p$, for $1 \leq j \leq k$ - 1.

In a step referenced 505, a counter variable $i$ is initialized as follows: $i \leftarrow 1$.

In a step referenced 506, a comparison between the value of the variable i and the value $k$ - 1 is performed. If the value of the variable $i$ is smaller or equal to the value $k$ - 1, then the steps referenced 507 and 508 are executed. If the value of the variable $i$ is strictly greater than the value $k$ - 1, then a step referenced 509 is executed. Such step 509 comprises comparing the value of the variable $A$ with the value of the variable $C_0$. If the value of the variable A is different from the value of the variable $C_0$, then the variable $M$ is modified as follows: $M \leftarrow M + B$. Otherwise, the variable $M$ is not modified. Then, the variable $M$ is outputted, and the decryption method is ended up. Indeed, the variable $M$ comprises in that case the value of the plaintext $m$.

In a step referenced 507, the value of the variable $A$ is compared with the one of the variable $C_{k-i}$. If these value are different from each other, then the value of the variable $M$ is modified as follows : $M \leftarrow M + B$, and the value of the variable $A$ is also modified as follows: $A \leftarrow A. U_i \bmod p$.

In a step referenced 508, the variable $B$ is updated as follows: $B \leftarrow 2B$, and an increment operation by one of the value of the variable i is performed (e.g. $i \leftarrow i + 1$). Then the process returns to the step 506.

By determining the values $\tilde{D}[j]$ and $C_j$ in such way, the method according to this embodiment has also a cubic complexity (whereas the classical decryption method has a quartic complexity).

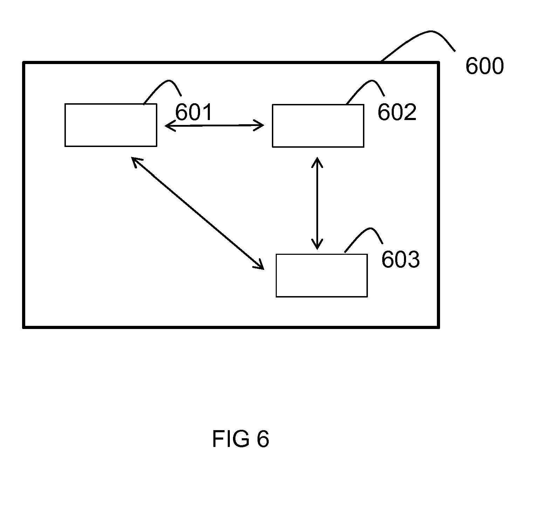

Figure 6 presents a device that can be used to perform one or several steps of methods disclosed in the present document.

Such device referenced 600 comprise a computing unit (for example a CPU, for *"Central Processing Unit"*), referenced 601, and one or several memory units (for example a RAM (for *"Random Access Memory")* block in which intermediate results can be stored temporarily during the execution of instructions a computer program, or a ROM block in which, among other things, computer programs are stored, or an EEPROM (*"Electrically-Erasable Programmable Read-Only Memory"*) block, or a flash block) referenced 602. Computer programs are made of instructions that can be executed by the computing unit. Such device 600 can also comprise a dedicated unit, referenced 603, constituting an input-output interface to allow the device 600 to communicate with other devices. In particular, this dedicated unit 603 can be connected with an antenna (in order to perform communication without contacts), or with serial ports (to carry communications "contact"). Let's remark that the arrows in Figure 6 means that the linked unit can exchange data through buses for example together.

In an alternative embodiment, some or all of the steps of the method previously described, can be implemented in hardware in a programmable FPGA (*"Field Programmable Gate Array"*) component or ASIC (*"Application-Specific Integrated Circuit"*) component. In an alternative embodiment, some or all of the steps of the method previously described, can be executed on an electronic device comprising memory units and processing units as the one disclosed in the Figure 6.

**Claims**

**1.** Method for processing a generalized Goldwasser-Micali ciphertext, said ciphertext being obtained through a use of a public key, said method being executed on an electronic device and being **characterized in that** it comprises:

- determining at least one bit of a binary representation of a plaintext associated with said ciphertext, said at least one bit corresponding to a bit positioned at $j$-th position of said binary representation of said plaintext, $j$ being an integer greater or equal to one, and position zero of said binary representation corresponding to the least significant bit of said binary representation, said determining being a function of
- said ciphertext,
- an element of said public key,
- a private key associated to said public key,
- an element defined in function of said private key, and
- least significant bits of said plaintext from position zero to $j$ - 1 in said binary representation.

**2.** Method according to claim 1, **characterized in that** said determining is performed for all the bits of said binary representation of said plaintext having a position different from zero.

**3.** Method according to any claims 1 or 2, **characterized in that** it comprises obtaining said least significant bit of said binary representation of said plaintext in function of said ciphertext, and said element defined in function of said private key.

4. Method according to any claims 1 to 3, **characterized in that** said binary representation of said plaintext is a $k$-bit string, $k$ being an integer greater or equal to one, and **in that** said element defined in function of said private key corresponds to $\lambda_{j+1} = 2^{k-(j+1)} p'$, where $p'$ is an odd integer linked to said private key $p$, which is a prime number, by the following equation: $p = 2^k p' + 1$.

5. Method according to claim 4, **characterized in that** said determining of said at least one bit positioned at $j$-th position of said binary representation of said plaintext comprises determining a first value $\left(\frac{c}{y^{m \bmod 2^j}}\right)^{\lambda_{j+1}}$ , where $c$ corresponds to said ciphertext, $y$ corresponds to said element of said public key, and comparing said first value with 1 or $p - 1$.

6. Method according to claim 5, **characterized in that** said determining said first value comprises obtaining at least a second value $D$ corresponding to $y^{-p'} \bmod p$, where $mod$ is a modular reduction.

7. Method according to claim 6, **characterized in that** said determining said first value comprises obtaining at least $i$ values, $i$ being comprised between 1 and $j$, defined in function of said at least second value $\tilde{D}$.

8. Method according to claim 6 and 2, **characterized in that** said determining said first value comprises obtaining at least $i$ values, $i$ being comprised between 1 and $k - 1$, defined in function of said at least second value $\tilde{D}$.

9. Method according to claim 5, **characterized in that** said determining said first value comprises obtaining at least a third value $\tilde{D}$ corresponding to $y^{p'} \bmod p$, where $mod$ is a modular reduction.

10. Method according to claim 9, **characterized in that** said determining said first value comprises obtaining at least $i$ values, i being comprise between 1 and $j$, defined in function of said at least third value $\tilde{D}$.

11. Method according to claim 9 and 2, **characterized in that** said determining said first value comprises obtaining at least $i$ values, $i$ being comprise between 1 and $k - 1$, defined in function of said at least third value $\tilde{D}$.

12. Method according to any claims 4 to 11, **characterized in that** it comprises determining said private key $p$ from said odd integer $p'$, said odd integer $p'$ being stored on a memory unit of said electronic device.

13. Method according to any claims 1 to 12, **characterized in that** said binary representation is stored on said electronic device according to big-endian rule.

14. Method according to any claims 1 to 12, **characterized in that** said binary representation is stored on said electronic device according to little-endian rule.

15. A computer-readable and non-transient storage medium storing a computer program comprising a set of computer-executable instructions to implement a method for processing a generalized Goldwasser-Micali ciphertext when the instructions are executed by a computer, wherein the instructions comprise instructions, which when executed, configure the computer to perform a method for processing of claims 1 to 14.

16. Electronic device for processing a generalized Goldwasser-Micali ciphertext, said ciphertext being obtained through a use of a public key, said electronic device being **characterized in that** it comprises:

   - means for determining at least one bit of a binary representation of a plaintext associated with said ciphertext, said at least one bit corresponding to a bit positioned at $j$-th position of said binary representation of said plaintext, $j$ being an integer greater or equal to one, and position zero of said binary representation corresponding to the least significant bit of said binary representation, said means for determining being able to determine a function of
   - said ciphertext,
   - an element of said public key,
   - a private key associated to said public key,
   - an element defined in function of said private key, and
   - least significant bits of said plaintext from position zero to $j - 1$ in said binary representation.

Initialization of variables M, B and U — 101

$C \leftarrow c^{p'} \bmod p \; ; \; i \leftarrow 1$ — 102

103

Comparison between i and k — if i > k

If $i \leqslant k$

$z \leftarrow (C.U^M)^{2^{k-i}} \bmod p$ — 104

if $( z \neq 1 )$ then $M \leftarrow M + B$ — 105

$B \leftarrow 2B \; ; \; i \leftarrow i+1$ — 106

M

FIG 1

k          p'          D          c

Initialization of variables M, B and U          201

$C \leftarrow c^{p'} \bmod p$ ; $i \leftarrow 1$          202

203

Comparison between i and k-1          if i > k-1

If i $\leq$ k-1

$z \leftarrow C^{2^{k-i}} \bmod p$          204

if ( z $\neq$ 1 ) then M$\leftarrow$ M + B and
C$\leftarrow$ C.U mod p          205

B $\leftarrow$ 2B ; U $\leftarrow$ U$^2$ mod p ; i $\leftarrow$ i+1          206

207          if C $\neq$ 1 then
M$\leftarrow$ M+B

M

FIG 2

k          p'          D [1],... D[k-1]          c

Initialization of variables M and B    301

$U_i \leftarrow$ D[i] For i =1 to k-1    302

$C \leftarrow c^{p'}$ mod p; i $\leftarrow$ 1    303

304

Comparison between i and k-1          if i > k-1

If i $\leq$ k-1

$z \leftarrow C^{2^{k-i}}$ mod p    305

if ( z $\neq$ 1 ) then M$\leftarrow$ M + B
and                    $C \leftarrow C.U_i$ mod p    306

B$\leftarrow$ 2B ; i $\leftarrow$ i+1    307

if (C $\neq$ 1) then
308    M$\leftarrow$ M+B

M

FIG 3

FIG 4

$k$        $p'$        $c$        $\widetilde{D}$ [1],...., $\widetilde{D}$ [k-1]

| Initialization of variables M, A and B | 501 |

| For i = 1 to k-1 do $U_i \leftarrow \widetilde{D}$ [ i ] | 502 |

| $C_0 \leftarrow c^{p'}$ mod p | 503 |

| For i = 1 to k-1 do $C_i \leftarrow C^2_{i-1}$ mod p | 504 |

| $i \leftarrow 1$ | 505 |

506

| Comparison between i and k-1 | if i > k-1 |

If i ≤ k-1

| if ( $A \neq C_{k-i}$ ) then $M \leftarrow M+B$ <br> $A \leftarrow A.U_i$ mod p | 507 |

| $B \leftarrow 2B$ ; $i \leftarrow i+1$ | 508 |

| if ($A \neq C_0$) then <br> $M \leftarrow M+B$ | 509 |

M

FIG 5

FIG 6

Europäisches
Patentamt

European
Patent Office

Office européen
des brevets

# EUROPEAN SEARCH REPORT

Application Number

EP 13 30 6889

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | MARC JOYE ET AL: "Efficient Cryptosystems from 2 k -th Power Residue Symbols", 26 May 2013 (2013-05-26), ADVANCES IN CRYPTOLOGY EUROCRYPT 2013, SPRINGER BERLIN HEIDELBERG, BERLIN, HEIDELBERG, PAGE(S) 76 - 92, XP047028441, ISBN: 978-3-642-38347-2 | 1-4, 12-16 | INV. H04L9/30 |
| A | * section 3.2 * | 5,11 | |
| A | DAVID NACCACHE ET AL: "A new public key cryptosystem based on higher residues", PROCEEDINGS OF THE 5TH ACM CONFERENCE ON COMPUTER AND COMMUNICATIONS SECURITY , CCS '98, 1 January 1998 (1998-01-01), pages 59-66, XP055129647, New York, New York, USA DOI: 10.1145/288090.288106 ISBN: 978-1-58-113007-2 * sections 2.2 and 2.5 * | 1-16 | |

TECHNICAL FIELDS SEARCHED (IPC)

H04L

The present search report has been drawn up for all claims

| Place of search | Date of completion of the search | Examiner |
|---|---|---|
| Munich | 27 August 2014 | Billet, Olivier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. KURIBAYASHI et al.** Fingerprinting protocol for images based on additive homomorphic property. *IEEE Trans. Image Process,* 2005
- **N. ISLAM et al.** Application of homomorphism to secure image sharing. *journal Optics Communications,* 01 September 2011, vol. 284 (19), 4412-4429
- **S. GOLDWASSER ; S. MICALI.** Probabilistic Encryption and How to Play Mental Poker Keeping Secret All Partial Information. *proceedings of STOC'82,* 1982, 365-377
- **M. JOYE ; B. LIBERT.** Efficient Cryptosystems from 2^-th Power Residue Symbols. *proceedings of Eurocrypt 2013, Lecture Notes in Computer Science,* 2013, vol. 7881, 76-92
- **J. BRINGER et al.** An Application of the Goldwasser-Micali Cryptosystem to Biometric Authentication. *proceedings of the conference ACISP'07*
- **M. JOYE ; B. LIBERT.** A scalable scheme for privacy-preserving aggregation of time-series data. *the proceedings of the conference Financial Cryptography and Data Security,* 2013
- **M. JOYE ; B. LIBERT.** Efficient Cryptosystems from 2k-th Power Residue Symbols. *Eurocrypt 2013,* 2013, vol. 7881, 76-92
- **S. POHLIG ; M. HELLMAN.** An improved algorithm for computing logarithms over GF(p) and its cryptographic significance. *IEEE Trans. on Information Theory,* 1978, vol. 1 (24), 106-110